# EUROPÄISCHE PATENTSCHRIFT

(11) **EP 0 741 157 B1**
(45) Veröffentlichungstag und Bekanntmachung des Hinweises auf die Patenterteilung: **01.09.1999**
(21) Anmeldenummer: 96106291.6
(22) Anmeldetag: 22.04.1996
(51) Int. Cl.: C08G 18/80

(54) **Blockierte Polyisocyanate und ihre Verwendung**
Blocked polyisocyanates and their use
Polyisocyanates bloqués et leur utilisation

(30) Priorität: 04.05.1995 DE 19516400
(43) Veröffentlichungstag der Anmeldung: 06.11.1996
(73) Patentinhaber: BAYER AG, 51368 Leverkusen (DE)
(72) Erfinder: König, Eberhard Dr., 51375 Leverkusen (DE); Engbert, Theodor Dr., 50968 Köln (DE)

(56) Entgegenhaltungen:
- EP-A- 0 600 314
- EP-A- 0 654 490
- US-A- 3 721 645

## Beschreibung

Die Erfindung betrifft neue 1,2,4-Triazol-blockierte Lackpolyisocyanate mit geringer Kristallisationsneigung und ihre Verwendung als Vernetzer in Einbrennlacken.

Blockierungsmittel für Isocyanatgruppen, die die Forderungen sowohl nach einer erniedrigten Abspalttemperatur von 130 bis 140°C als auch nach einer möglichst geringen Thermovergilbung des PUR-Lackes erfüllen, sind nicht zahlreich. 1,2,4-Triazol ist ein solches Isocyanat-Blockierungsmittel.

1,2,4-Triazol ist jedoch mit dem Nachteil behaftet, daß die mit dieser Verbindung blockierte Lackpolyisocyanate zur Kristallisation neigen (was bei der Herstellung von Pulverlackvernetzern auch von Vorteil sein kann, vgl. US 4 482 721) oder nicht zu niedrigviskosen Lösungen in Lacklösungsmitteln gelöst werden können, die bezüglich ihres Festkörpergehalts den heutigen Forderungen der Praxis genügen. Aus diesem Grund wurden mischblockierte Polyisocyanate entwickelt, die nicht mehr mit diesem Nachteil behaftet sind (vgl. EP-A-0 600 314 oder die Deutschen Patentanmeldungen P 44 167 50.4 oder P 43 39 367.5), jedoch bezüglich der Vergilbungsresistenz den Forderungen der Praxis oftmals nicht voll gerecht werden.

Wegen der hervorragenden Stabilität gegen Thermovergilbung von Lackpolyisocyanaten, die ganz überwiegend, vorzugsweise ausschließlich mit 1,2,4-Triazol blockierte Isocyanatgruppen aufweisen, war es die der Erfindung zugrundeliegende Aufgabe, derartige Lackpolyisocyanate zur Verfügung zu stellen, die im übrigen nicht mit dem genannten Nachteil einer hohen Viskosität ihrer Lösungen in Lacklösungsmitteln behaftet sind.

Diese Aufgabe konnte mit der Bereitstellung der nachstehend näher beschriebenen erfindungsgemäßen Lackpolyisocyanate gelöst werden.

Gegenstand der Erfindung sind mit 1,2,4-Triazol blockierte Isocyanatgruppen aufweisende Polyisocyanate, die als 60 gew.-%ige Lösung in n-Butyldiglykolacetat bei 23°C eine Viskosität von maximal 10 000 mPa·s (rotationsviskosimetrisch gemäß DIN 53 019 mit einem SV-DIN-Drehkörper bei einem Schergefälle von 50 sec⁻¹) und, bezogen auf Feststoff, einen Gehalt an blockierten Isocyantgruppen (berechnet als NCO, Molekulargewicht = 42) von 7 bis 14 Gew.-% aufweisen, die Umsetzungsprodukte darstellen von
A) einer Polyisocyanatkomponente mit einem NCO-Gehalt von 12 bis 24 Gew.-%, bestehend aus (i) Allophanat-, Biuret-, Isocyanurat-, Uretdion- und/oder Urethangruppen aufweisenden (cyclo)aliphatischen Lackpolyisocyanaten auf Basis von (cyclo)aliphatischen Diisocyanaten oder aus (ii) Gemischen derartiger Lackpolyisocyanate mit cycloaliphatischen Diisocyanaten eines maximalen Molekulargewichts von 300, wobei mindestens 30 Gew.-% der in der Komponente A) als freie Diisocyanate vorliegenden und/oder in den Lackpolyisocyanaten gebundenen (cyclo)aliphatischen Diisocyanate aus Methylsubstituenten aufweisenden cycloaliphatischen Diisocyanaten eines maximalen Molekulargewichts von 222 bestehen,
B) 50 bis 80 Äquivalent-%, bezogen auf die Isocyanatgruppen der Komponente A) eines monofunktionellen Blockierungsmittels für Isocyanatgruppen, welches zumindest zu 90, vorzugsweise zu 95 und besonders bevorzugt zu 100 Gew.-% aus 1,2,4-Triazol und gegebenenfalls zum Rest aus anderen an sich bekannten Blockierungsmitteln besteht,
C) 10 bis 30 Äquivalent-%, bezogen auf die Isocyanatgruppen der Komponente A), einer Polyesterkomponente mit einer OH-Zahl von 56 bis 250, bestehend aus mindestens einem linearen Polyesterdiol und gegebenenfalls
D) 0 bis 20 Äquivalent-%, bezogen auf die Isocyanatgruppen der Komponente A) an Hydrazinderivaten der Formeln 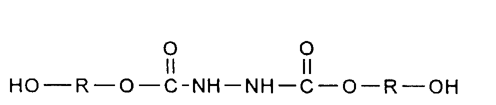 und/oder

   H₂N-NH-CO-O-R-OH

   in welchen
   - R: für einen gesättigten Kohlenwasserstoffrest mit 2 bis 5 Kohlenstoffatomen steht, wobei zwischen den beiden Sauerstoffatomen mindestens 2 Kohlenstoffatome angeordnet sind.

Gegenstand der Erfindung ist auch die Verwendung dieser blockierten Polyisocyanate als Vernetzer in Einkomponenten-Polyurethan-Einbrennlacken.

Die zur Herstellung der erfindungsgemäßen blockierten Polyisocyanate eingesetzte Ausgangskomponente A) weist einen NCO-Gehalt von 12 bis 24, vorzugsweise 15 bis 20 Gew.-% auf. Der in diesem Zusammenhang verwendete Begriff "(cyclo)aliphatisch" steht für "aliphatisch und/oder cycloaliphatisch".

Die Komponente A) besteht aus (i) Lackpolyisocyanaten mit (cyclo)aliphatisch gebundenen Isocyanatgruppen oder aus (ii) Gemischen derartiger Lackpolyisocyanate mit bis zu 80, vorzugsweise bis zu 60 NCO-Äquivalent-% an Diisocyanaten mit ausschließlich cycloaliphatisch gebundenen Isocyanatgruppen eines maximalen Molekulargewichts von 300. Erfindungswesentlich ist hierbei, daß zumindest 30, vorzugsweise zumindest 50 Gew.-% der in der Komponente A) als freie Diisocyanate und/oder in den Lackpolyisocyanaten gebundenen Diisocyanate, cycloaliphatische Diisocyanate eines maximalen Molekulargewichts von 222, vorzugsweise des Molekulargewichtsbereichs 180 bis 222 darstellen, die mindestens einen Methylsubstituenten am cycloaliphatischen Ring aufweisen. Unter "cycloaliphatischen Diisocyanate" sind im übrigen in diesem Zusammenhang beliebige Diisocyanate zu verstehen, die an aliphatische oder cycloaliphatische Kohlenstoffatome gebundene Isocyanatgruppen und mindestens einen cycloaliphatischen Ring, vorzugsweise Cyclohexanring pro Molekül aufweisen.

Geeignete Lackpolyisocyanate (i) sind die an sich bekannten Allophanat-, Biuret-, Isocyanurat-, Uretdion- und/oder Urethangruppen aufweisenden Derivate von einfachen Diisocyanaten oder von Gemischen von einfachen Diisocyanaten. Einfache Diisocyanate in diesem Zusammenhang sind die an sich bekannten (cyclo)aliphatischen Diisocyanate, wie insbesondere Hexamethylendiisocyanat (HDI), 1-Isocyanato-3,3,5-trimethyl-5-isocyanatomethyl-cyclohexan (IPDI), 1-Methyl-2,4-diisocyanato-cyclohexan, dessen technische Gemische mit bis zu 35 Gew.-%, bezogen auf Gemisch, an 1-Methyl-2,6-diisocyanato-cyclohexan (HTDI) und 4,4'-Diisocyanato-dicyclohexylmethan (HMDI). Die bevorzugten erfindungswesentlichen cycloaliphatischen Diisocyanate, die mindestens einen Methylsubstituenten aufweisen sind HTDI und IPDI. IPDI ist in diesem Zusammenhang ganz besonders bevorzugt.

Als Komponente A) geeignet sind beliebige, diesen Ausführungen entsprechende Lackpolyisocyanate bzw. Abmischungen von derartigen Lackpolyisocyanaten mit freien Diisocyanaten. Diese Gemische können durch Abmischung der Einzelkomponenten oder aber auch in situ dergestalt hergestellt werden, daß man bei der zur Herstellung der Lackpolyisocyanate erforderlichen Modifizierungsreaktion im Überschuß eingesetzte Ausgangsdiisocyanate nach Beendigung der Modifizierungsreaktion nicht oder nur teilweise entfernt.

Als Blockierungsmittel B) kommt 1,2,4-Triazol zum Einsatz. Grundsätzlich möglich, jedoch keineswegs bevorzugt ist, den oben gemachten Ausführungen entsprechend, auch die Verwendung von Gemischen dieses Blockierungsmittels mit anderen Blockierungsmitteln, wie beispielsweise 3,5-Dimethylpyrazol, Diisopropylamin, Malonsäurediethylester oder Butanonoxim.

Bei der Komponente C) handelt es sich um lineare Polyesterdiole der OH-Zahl 56 bis 250, vorzugsweise 150 bis 230 mg KOH/g. Geeignete Ausgangsmaterialien zur Herstellung dieser Polyesterdiole sind insbesondere Alkandiole wie Hexandiol-1,6 und/oder Neopentylglykol und Adipinsäure bzw. ε-Caprolacton. Besonders bevorzugt sind die den gemachten Ausführungen entsprechenden Adipinsäure-Neopentylglykol-Polyesterdiole oder die entsprechenden Hexandiol-1,6-ε-Caprolacton-Polyesterdiole.

Bei der gegebenenfalls mitzuverwendenden Komponente D) handelt es sich um Hydrazinderivate der bereits obengenannten Formeln. Die Herstellung dieser Hydrazinderivate erfolgt durch Umsetzung von Hydrazinhydrat mit cyclischen Carbonaten, beispielsweise mit Ethylen-, Isopropylen- oder Neopentylencarbonat entsprechend den in EP-A-0 050 284 diesbezüglich gemachten Ausführungen.

Bevorzugt wird das Addukt aus 1 Mol Hydrazin und 2 Mol Propylen-1,2-carbonat eingesetzt:

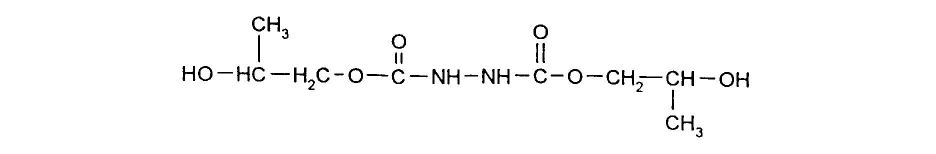

Die Verbindungen D) werden vorzugsweise in Mengen von 5 bis 15 Äquivalent %, bezogen auf die Isocyanatgruppen der Komponente A) eingesetzt, wobei die endständigen Hydroxyl- und primären Aminogruppen, nicht jedoch die NH-Gruppen als monofunktionelle, gegenüber Isocyanatgruppen reaktionsfähige Gruppen in die Berechnung eingehen.

Bei der Herstellung der erfindungsgemäßen blockierten Polyisocyanate kommen die genannten Ausgangsmaterialien in solchen Mengen zum Einsatz, die einem Äquivalentverhältnis von Isocyanatgruppen der Komponente A) zu gegenüber Isocyanatgruppen reaktionsfähigen Gruppen der Komponenten B) bis D) von 0,9:1 bis 1,0:1 entsprechen. Demzufolge weisen die erfindungsgemäßen blockierten Polyisocyanate maximal 0,5 Gew.-%, vorzugsweise keine freien Isocyanatgruppen auf.

Die Herstellung der erfindungsgemäßen blockierten Polyisocyanate kann prinzipiell nach zwei unterschiedlichen Varianten erfolgen, wobei im allgemeinen stets, zumindest am Ende der Umsetzungen Lösungsmittel wie beispielsweise 1-Methoxypropyl-2-acetat, n-Butylacetat und/oder n-Butyldiglykolacetat in solchen Mengen mitverwendet werden, daß am Ende der Umsetzung 40 bis 80, vorzugsweise 50 bis 70 gew.-%ige Lösungen der erfindungsgemäßen blockierten Polyisocyanate vorliegen.

Nach einer ersten Variante der Herstellung der erfindungsgemäßen blockierten Polyisocyanate legt man allen Komponenten A) bis D) in einem Lösungsmittel der beispielhaft genannten Art vor und erhitzt allmählich auf 90 bis 120°C, vorzugsweise 100 bis 110°C, bis zum Erreichen des berechneten NCO-Gehalts, d.h. vorzugsweise bis zum Verschwinden der Isocyanatgruppen.

Neben diesem Eintopfverfahren ist auch eine stufenweise Umsetzung der genannten Ausgangsmaterialien möglich, beispielsweise dergestalt, daß man einen Teil der Isocyanatkomponente A), z.B. das gegebenenfalls mitverwendete monomere IPDI zuerst mit der Komponente D) umsetzt und anschließend die restlichen Ausgangskomponenten und Lösungsmittel hinzugibt und bei 90 bis 120°C, vorzugsweise 100 bis 110°C liegenden Temperaturen abreagiert, bis der berechnete NCO-Gehalt erreicht ist, d.h. bis vorzugsweise sämtliche NCO-Gruppen verschwunden sind.

Die erfindungsgemäßen blockierten Polyisocyanate können in Kombination mit den aus der Lackchemie bekannten, in Einbrennlacken verwendeten Polyhydroxylverbindungen wie beispielsweise Hydroxyllgruppen aufweisenden Polyester- und/oder Polyacrylat-Harzen kombiniert werden. Derartige Kombinationen stellen Bindemittel für Einkomponenten-Polyurethan-Einbrennlacke dar, die bei Einbrenntemperaturen von ca. 140°C während eines Zeitraums von ca. 30 Minuten ohne nennenswerte Thermovergilbung ausgehärtet werden können. Klarlacke auf dieser Basis zeichnen sich im übrigen durch eine ausgezeichnete Elastizität und hohe Kratzbeständigkeit aus.

Einbrennlacke, die die erfindungsgemäßen blockierten Polyisocyanate als Vernetzer enthalten, können insbesondere bei der Automobillackierung Verwendung finden.

In die nachfolgenden Beispielen beziehen sich alle Prozentangaben auf das Gewicht.

### Beispiel 1 (erfindungsgemäß)

| | | |
|---|---|---|
| 141,6 g (0,6 Val) | einer 80 %igen Lösung in n-Butylglykolacetat mit einem NCO-Gehalt der Lösung von 17,8 % eines Mischtrimerisates, hergestellt durch Teiltrimerisierung der Isocyanatgruppen eines Gemisches aus 90 Gew.-Teilen IPDI und 10 Gew.-Teilen HMDI | |
| | | |
| 80,0 g (0,4 Val) | eines isocyanurathaltigen Polyisocyanates auf Basis von HDI, NCO-Gehalt ca. 21 %, Viskosität bei 23°C, ca. 3 000 m·Pas | |
| 221,6 g (1,0 Val) | NCO-Komponente | |
| 11,8 g (0,1 Val) | des Additionsproduktes von 1 Mol Hydrazin und 2 Mol Propylencarbonat | |
| 84,0 g (0,2 Val) | eines Adipinsäure-Hexandiol-1,6-Polyesters, OH-Zahl 134 | |
| 48,3 g (0,7 Mol) | 1,2,4-Triazol | |
| 196,7 g (60 %ig) | Butyldiglykolacetat | |
| 562,4 g (0,7 Val) | blockierte NCO-Gruppen berechn. NCO-Gehalt (block.): | 5,2 % |
| | Festkörpergehalt: | 60 % |
| | Viskosität bei 23°C: | 6 000 m·Pas |

### Durchführung:

Die beiden obigen Polyisocyanate werden vorgelegt. Zu dieser Mischung gibt man das genannte Hydrazin/Propylencarbonat-Additionsprodukt, den Adipinsäure-Polyester, Butyldiglykolacetat und die weiße Schuppenware von 1,2,4-Triazol. Man erwärmt unter Rühren stufenweise auf 105°C, wobei nach ca. 4 Stunden Umsetzungsdauer IR-spektroskopisch keine freien NCO-Gruppen mehr nachweisbar sind. Nach dem Abkühlen erhält man eine klare, fast farblose Lösung mit einer Viskosität bei 23°C von ca. 5 000 m·Pas. Für die Weiterverarbeitung als Klarlack beträgt das berechnete NCO-Äquivalent (blockiert) ca. 807 g.

### Beispiel 1 (erfindungemäß)

| Ansatz: | | |
|---|---|---|
| 22,2 g (0,2 Val) | IPDI | |
| 157,5 g (0,45 Val) | eines isocyanurathaltigen Polyisocyanates auf Basis von IPDI, 70 %ig, in 1-Methoxypropylacetat-(2)-Xylol, NCO-Gehalt der Lösung 12 % | |
| 70,0 g (0,35 Val) | des HDI-Trimerisats mit einem NCO-Gehalt von 21 %, gemäß Beispiel 1 | |
| 249,7 g (1,0 Val) | NCO-Komponente | |
| 11,8 g (0,1 Val) | des Additionsproduktes von 1 Mol Hydrazin und 2 Mol Propylencarbonat | |
| 32,5 g (0,1 Val) | eines Hexandiol-1,6-ε-Caprolacton-Polyesters, OH-Zahl 172 | |
| 55,9 g (0,81 Mol) | 1,2,4-Triazol | |
| 154,4 g (=60 %ig) | 1-Methoxy-propylacetat-(2) | |
| 504,3 g (0,8 Val) | blockierte NCO-Gruppen | |
| | berechn. NCO-Gehalt (block.) | 6,6 % |
| | Festkörpergehalt | 60 % |
| | Viskosität bei 23°C | ca. 8 400 m·Pas |

### Durchführung:

IPDI, das Hydrazin/Propylencarbonat-Additionsprodukt sowie eine Teilmenge von 22,6 g Methoxypropylacetat, entsprechend einer 60 %igen Lösung, werden unter Rühren auf 105°C erwärmt. Nach ca. 4 Stunden Reaktionsdauer wird ein NCO-Gehalt von 7,4 %, wie berechnet, ermittelt. Dabei entsteht ein lineares IPDI-Prepolymer mit dem Hydrazinadditionsprodukt. Man läßt auf ca. 80°C abkühlen und vermischt mit den beiden anderen NCO-Komponenten. Anschließend wird das restliche Lösemittel, der ε-Caprolacton-Polyester sowie 1,2,4-Triazol als weiße Schuppenware eingerührt. Wie in dem vorangegangenen Beispiel 1 setzt man bei 105°C für ca. 4 Stunden um, bis freies NCO verschwunden ist. Die Kontrolle erfolgt IR-spektroskopisch. Nach dem Abkühlen erhält man eine klare, fast farblose Lösung mit einer Viskosität bei 23°C von ca. 8 000 m·Pas. Diese Lösung hat ein berechnetes NCO-Aquivalent (blockiert) von ca. 637 g.

### Beispiel 3 (erfindungsgemäß)

Es werden Klarlackkombinationen mit den erfindungsgemäßen blockierten Vernetzern aus den Beispielen 1 und 2 sowie die Thermovergilbung beschrieben.

### 1. Klarlack-Aufbau

Für die Herstellung der Klarlacke wird eine gemischte Polyolkomponente, bestehend aus einem handelsüblichen Polyacrylatpolyol (®Desmophen A Versuchsprodukt LS 2051 der Bayer AG, Leverkusen - 75 %ige Lösung in Xylol, OH-Gehalt der Lösung von 4,7 %) und einem flexibilisierenden Polyester (®Desmophen Versuchsprodukt LS 2971 der Bayer AG, Leverkusen - 80 %ige Lösung in n-Butylacetat, OH-Gehalt der Lösung von 3,8 %) eingesetzt.

| | | |
|---|---|---|
| 80 | OH-Äquivalent-% LS 2051 | 290 g |
| 20 | OH-Äquivalent-% LS 2971 | 90 g |
| 100 | OH-Äquivalent-% OH-Komponente | 380 g |

Die Klarlacke werden durch Mischen der obigen Polyolkomponente mit den erfindungsgemäßen Vernetzern der Beispiele 1 und 2 im Verhältnis ihrer Äquivalent-Gewichte (NCO/OH = 1) unter Zugabe eines Katalysators wie folgt hergestellt.

| Klarlackrezeptur | Polyisocyanat | Polyolkomponente | Katalyse mit 0,1 % Dibutylzinndilaurat |
|---|---|---|---|
| A | Beispiel 1 807 g | 380 g | 1,1 g |
| B | Beispiel 2 637 g | 380 g | 1,0 g |

Die obigen Klarlacke werden auf Prüfbleche, die mit einem handelsüblichen, weißen Basislack, z.B. von der Fa. Spies & Hecker/Köln, beschichtet sind, in einer Naßschichtdicke von ca. 120 bis 150 µm appliziert.

Die Prüfbleche werden anschließend für 30 Minuten bei 140°C im Trockenschrank eingebrannt. Danach erfolgt die erste Farbmessung nach der sogenannten CIE-LAB-Methode. Je größer der hierbei ermittelte positive b-Wert ist, um so gelber hat sich der Klarlack verfärbt.

Hieran schließt sich der Überbrennvorgang mit 30 Minuten bei 160°C an und der Zuwachs der Gelbfärbung, der sogenannte Δb-Wert nach dem CIE-LAB-Farbsystem (DIN 6174), wird gemessen. Dieser Wert sollte für nichtvergilbende Klarlacke möglichst nahe bei 0 sein.

Die Ergebnisse der Klarlacke A unf B sind wie folgt zusammengefaßt.

| Klarlack | Thermovergilbung nach dem Einbrennvorgang (b) | Thermovergilbung nach dem Überbrennvorgang (Δb) | Schichdicke [µm] |
|---|---|---|---|
| A | 0,4 | 0,8 | 55 |
| B | 0,3 | 0,7 | 55 |

Die Thermovergilbungswerte der beiden Klarlacke A + B liegen eng beieinander, Lack B schneidet allerdings besser, sowohl nach dem Einbrennen als auch nach dem Überbrennen ab. Zum Vergleich seien die Thermovergilbungswerte für einen auf Basis eines isocyanurathaltigen Polyisocyanates auf Basis von HDI, wie er als NCO-Komponente in den Beispielen 2 und 3 mitverwendet wird, der aber jetzt mit Butanonoxim blockiert ist, genannt: Die Thermovergilbungswerte liegen viel schlechter, und zwar nach dem Einbrennen bei b = 1,3 und nach dem Überbrennen bei Δb = 1,9.

## Patentansprüche

1. Mit 1,2,4-Triazol blockierte Isocyanatgruppen aufweisende Polyisocyanate, die als 60 gew.-%ige Lösung in n-Butyldiglykolacetat bei 23°C eine Viskosität von maximal 10 000 mPa·s und, bezogen auf Feststoff, einen Gehalt an blockierten Isocyantgruppen (berechnet als NCO, Molekulargewicht = 42) von 7 bis 14 Gew.-% aufweisen, die Umsetzungsprodukte darstellen von
A) einer Polyisocyanatkomponente mit einem NCO-Gehalt von 12 bis 24 Gew.-%, bestehend aus (i) Allophanat-, Biuret-, Isocyanurat-, Uretdion- und/oder Urethangruppen aufweisenden (cyclo)aliphatischen Lackpolyisocyanaten auf Basis von (cyclo)aliphatischen Diisocyanaten oder aus (ii) Gemischen derartiger Lackpolyisocyanate mit cycloaliphatischen Diisocyanaten eines maximalen Molekulargewichts von 300, wobei mindestens 30 Gew.-% der in der Komponente A) als freie Diisocyanate vorliegenden und/oder in den Lackpolyisocyanaten gebundenen (cyclo)aliphatischen Diisocyanate aus Methylsubstituenten aufweisenden cycloaliphatischen Diisocyanaten eines maximalen Molekulargewichts von 222 bestehen,
B) 50 bis 80 Äquivalent-%, bezogen auf die Isocyanatgruppen der Komponente A) eines monofunktionellen Blockierungsmittels für Isocyanatgruppen, welches zumindest zu 90 Gew.-% aus 1,2,4-Triazol und zum Rest aus anderen an sich bekannten Blockierungsmitteln besteht,
C) 10 bis 30 Äquivalent-%, bezogen auf die Isocyanatgruppen der Komponente A), einer Polyesterkomponente mit einer OH-Zahl von 56 bis 250, bestehend aus mindestens einem linearen Polyesterdiol und gegebenenfalls
D) 0 bis 20 Äquivalent-%, bezogen auf die Isocyanatgruppen der Komponente A) an Hydrazinderivaten der Formeln 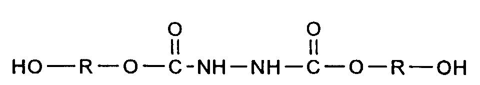 und/oder
H₂N-NH-CO-O-R-OH
in welchen
R für einen gesättigten Kohlenwasserstoffrest mit 2 bis 5 Kohlenstoffatomen steht, wobei zwischen den beiden Sauerstoffatomen mindestens 2 Kohlenstoffatome angeordnet sind.

2. Verwendung der blockierten Polyisocyanate gemäß Anspruch 1 als Vernetzer in Einkomponenten-Polyurethan-Einbrennlacken.

## Claims

1. Polyisocyanates having 1,2,4,-triazole-blocked isocyanate groups which have, as a 60 wt.% solution in diethylene glycol mono-n-butyl ether acetate, a viscosity at 23°C of at most 10000 mPa·s and a blocked isocyanate group content (calculated as NCO, molecular weight = 42), relative to solids, of 7 to 14 wt.%, which polyisocyanates are reaction products of
A) a polyisocyanate component with an NCO content of 12 to 24 wt.% consisting of (i) (cyclo)aliphatic lacquer polyisocyanates based on (cyclo)aliphatic diisocyanates and having allophanate, biuret, isocyanurate, uretidione and/or urethane groups or of (ii) mixtures of such lacquer polyisocyanates with cycloaliphatic diisocyanates of a maximum molecular weight of 300, wherein at least 30 wt.% of the (cyclo)aliphatic diisocyanates present in component A) as free diisocyanates and/or attached to the lacquer polyisocyanates consist of cycloaliphatic diisocyanates having methyl substituents and of a maximum molecular weight of 222,
B) 50 to 80 equivalent-%, relative to the isocyanate groups of component A), of a monofunctional isocyanate group blocking agent, which consists to an extent of at least 90 wt.% of 1,2,4-triazole and the remainder of other *per se* known blocking agents,
C) 10 to 30 equivalent-%, relative to the isocyanate groups of component A), of a polyester component with an OH value of 56 to 250, consisting of at least one linear polyester diol and optionally
D) 0 to 20 equivalent-%, relative to the isocyanate groups of component A), of hydrazine derivatives of the formulae 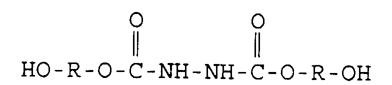 and/or
H₂N-NH-CO-O-R-OH
in which
R denotes a saturated hydrocarbon residue with 2 to 5 carbon atoms, wherein at least 2 carbon atoms are arranged between the two oxygen atoms.

2. Use of the blocked polyisocyanates according to claim 1 as crosslinking agents in single component polyurethane stoving lacquers.

## Revendications

1. Polyisocyanates à groupes isocyanate bloqués par le 1,2,4-triazole, qui, en solution à 60 % en poids dans l'acétate de n-butyldiglycol à 23°C, ont une viscosité maximale de 10 000 mPa.s et contiennent, sur les matières solides, de 7 à 14 % en poids de groupes isocyanate bloqués (exprimé en NCO, poids équivalent 42), ces polyisocyanates étant des produits de réaction de
A) un composant polyisocyanate a une teneur en NCO de 12 à 24 % en poids, consistant en polyisocyanates pour vernis (cyclo)aliphatiques à groupes allophanate, biuret, isocyanurate, uret-dione et/ou uréthane, à base de diisocyanates (cyclo)aliphatiques, ou en (ii) des mélanges de tels polyisocyanates pour vernis avec des diisocyanates cycloaliphatiques au poids moléculaire maximum de 300, au moins 30% en poids des diisocyanates (cyclo)aliphatiques présents dans le composant A) à l'état de diisocyanates libres et/ou à l'état combiné dans les polyisocyanates pour vernis consistant en diisocyanates cycloaliphatiques à substituants méthyle, au poids moléculaire maximum de 222,
B) 50 à 80 équivalents %, par rapport aux groupes isocyanates du composant A), d'un agent bloquant monofonctionnel des groupes isocyanates, consistant pour au moins 90 % en poids en le 1,2,4-triazole, le solde consistant en d'autres agents bloquants connus en soi,
C) 10 à 30 équivalents %, par rapport aux groupes isocyanate du composant A), d'un composant polyester d'indice d'OH 56 à 250, consistant en au moins un polyester-diol linéaire,
et le cas échéant
D) 0 à 20 équivalents %, par rapport aux groupes isocyanate du composant A), de dérivés de l'hydrazine de formules 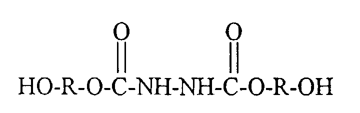 et/ou
H₂N-NH-CO-O-R-OH
dans lesquelles
R représente un radical hydrocarboné saturé en C₂-C₅, avec au moins 2 atomes de carbone entre les 2 atomes d'oxygène.

2. Utilisation des polyisocyanates bloqués selon la revendication 1, en tant qu'agents réticulants dans les vernis de polyuréthane à 1 composant à cuire au four.
